# EUROPEAN PATENT APPLICATION

(11) **EP 1 151 727 A2**
(43) Date of publication of application: **07.11.2001**
(21) Application number: 01110559.0
(22) Date of filing: 30.04.2001
(51) Int. Cl.: A61C 7/12

(54) **Orthodontic device for aligning and displacing teeth**

(30) Priority: 03.05.2000 IT MI000964
(71) Applicant: Veltri, Nicola, Dott. Prof., 20122 Milano (IT); Veltri, Alessandro, 20122 Milano (IT)
(72) Inventor: Veltri, Nicola, Dott. Prof., 20122 Milano (IT); Veltri, Alessandro, 20122 Milano (IT)
(74) Representative: Cicogna, Franco

(57) **Abstract**

An orthodontic device for aligning and displacing teeth comprises an attachment which can be applied to a tooth and having a vestibular surface and being characterized in that the vestibular surface comprises two or more slots for receiving each an orthodontic wire.

## Description

### BACKGROUND OF THE INVENTION

The present invention relates to an orthodontic device for aligning and displacing teeth.

Orthodontic devices for aligning and displacing teeth, either individually or in sets, comprising attachments, or so-called "brackets" applied to the teeth and coupled by force transmitting wires are already known.

The mentioned attachment or bracket element conventionally comprises a metal construction suitable for coupling to a tooth by glueing and including a front and horizontal slot, for receiving an orthodontic wire therein.

By applying a force to the orthodontic wire, the teeth, to which the brackets have been applied, are displaced and/or aligned.

### SUMMARY OF THE INVENTION

The aim of the present invention is to provide such an orthodontic device for aligning and displacing teeth, which is provided with improved functional and therapeutical characteristics, with respect to prior like devices.

Within the scope of the above mentioned aim, a main object of the present invention is to provide such an orthodontic device which is suitable to reduce the therapeutical time.

Another object of the present invention is to provide such an orthodontic device allowing to optimally control the forces applied to the teeth.

According to one aspect of the present invention, the above mentioned aim and objects, as well as yet other objects, which will become more apparent hereinafter, are achieved by an orthodontic device for aligning and displacing teeth, comprising an attachment to be applied to a tooth and having a vestibular surface, characterized in that said vestibular surface comprises two or more slots for receiving each an orthodontic wire therein.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:

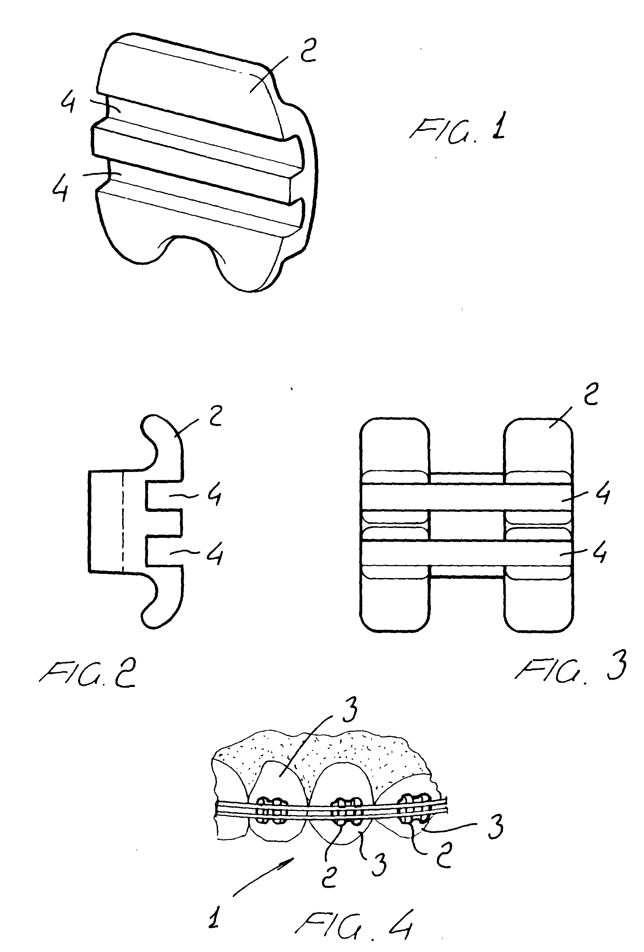

Figure 1 is a perspective view of the attachment or bracket element forming the orthodontic device for aligning and displacing teeth, according to the present invention;
Figure 2 is a side elevation view of the attachment or bracket element forming the orthodontic device for aligning and displacing teeth according to the invention;
Figure 3 is a front elevation view of the attachment or bracket element forming the orthodontic device for aligning and displacing teeth according to the invention;
Figure 4 is a schematic perspective view of a possible application of the orthodontic device for aligning and displacing teeth according to the invention;

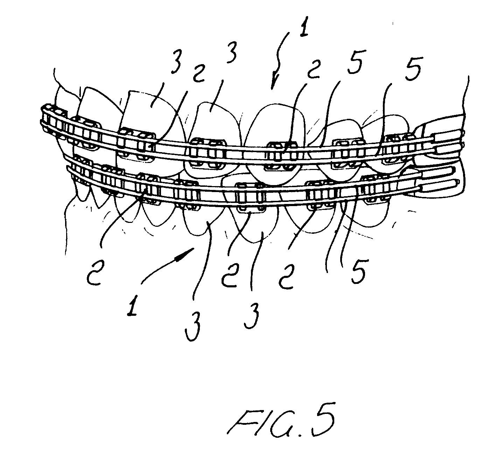

Figure 5 is a further schematic perspective view of a further possible application of the orthodontic device for aligning and displacing teeth according to the invention;
Figure 6 is a cross-sectioned side view of a modified embodiment of an attachment of bracket element, constituting an integrating portion of the present invention, including four slots for engaging therein four orthodontic wires;
Figure 7 is a further side perspective view illustrating the mouth of a patient having his/her teeth provided with the attachment or bracket elements shown in Figure 6, including a plurality of seats for housing therein suitable orthodontic wires;

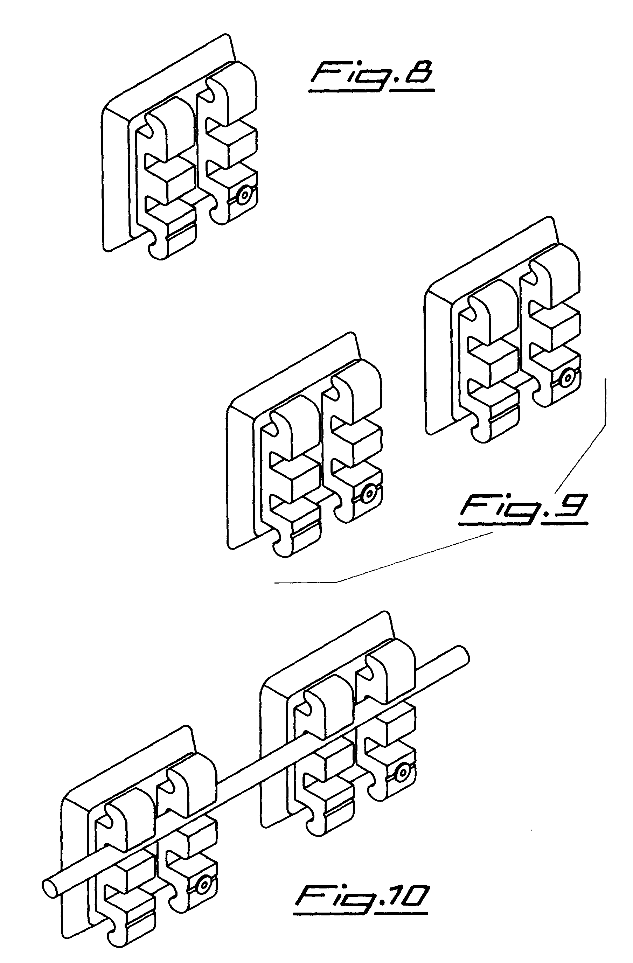

Figure 8 is a perspective view illustrating an attachment or bracket element which can be applied to a tooth and being provided with a vestibular surface including two slots for receiving each an orthodontic wire;

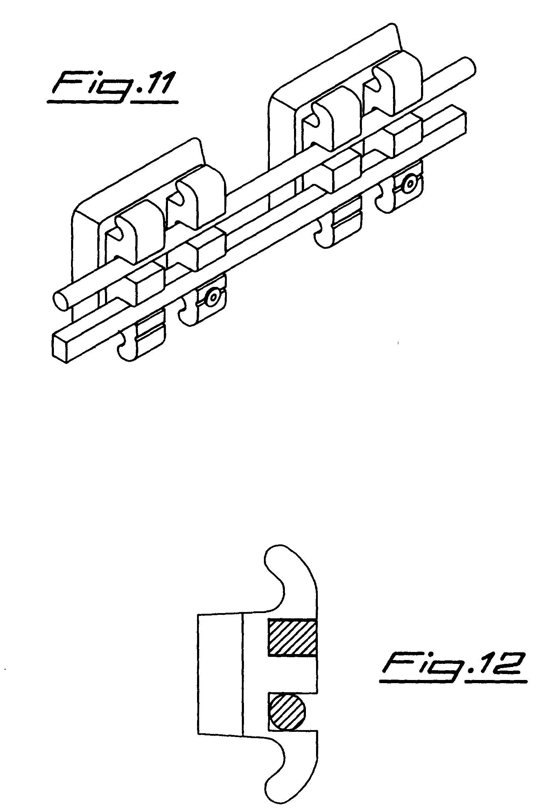

Figure 9 is a further perspective view, analogous to that of Figure 8, showing a pair of attachment or bracket elements including two slots;
Figure 10 is a further perspective view, analogous to Figure 9, with an orthodontic wire applied to one of the two slots formed in the attachment or bracket element;
Figure 11 is a further perspective view showing two attachment or bracket elements including two slots, in which two orthodontic wires are engaged, said orthodontic wires being respectively provided with a round cross section and a quadrilateral cross section;

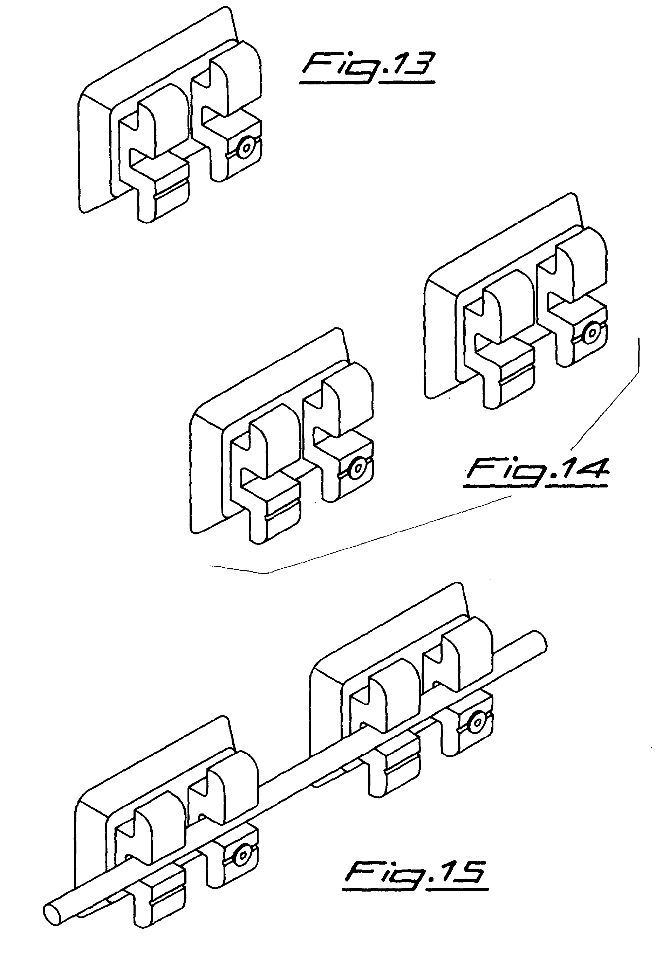

Figure 12 shows a cross-sectioned side view of the attachment or bracket element including two slots, in which two orthodontic wires are engaged, having respectively a rectangular and a round cross section;

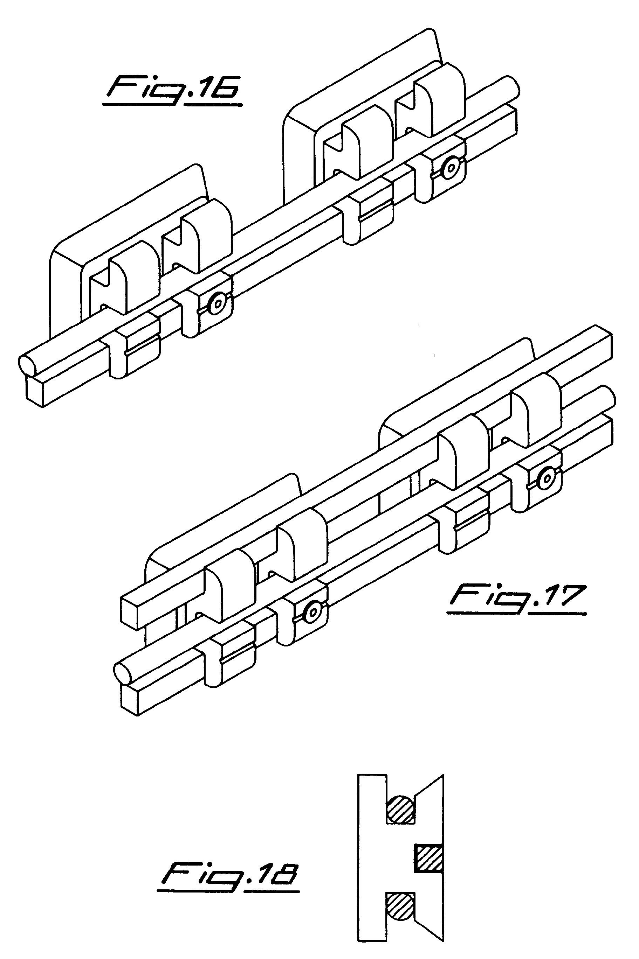

Figure 13 is a further perspective view illustrating an attachment or bracket element provided with three slots;
Figure 14 is a further perspective view illustrating a pair of attachment or bracket elements, of the type shown in Figure 13, including three slots, to be applied to a pair of adjoining teeth;
Figures 15, 16 and 17 show the same attachment elements, provided with three slots shown in Figure 14, but including, respectively, 1, 2 and 3 orthodontic wires, engaged in the mentioned slots;
Figure 18 shows the same attachment element shown in Figures 13, 14, 15, 16 and 17, but represented in cross-section with the three slots in which are engaged two orthodontic wires having a round cross-section and an orthodontic wire having a quadrilateral cross-section;
Figure 19 is a perspective view showing an attachment element including four slots, provided for engaging one or more orthodontic wires, up to a number of four, therein;

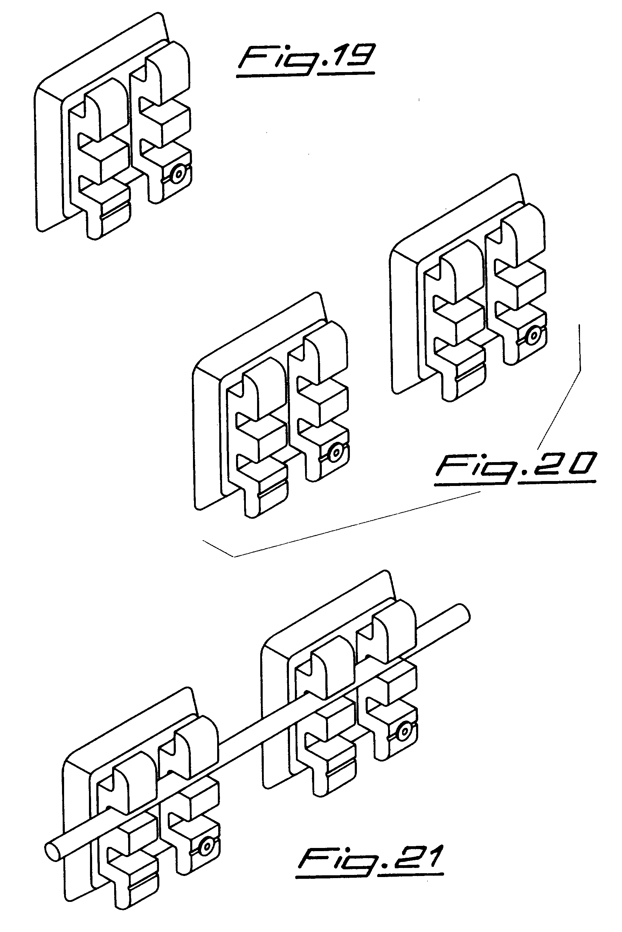

Figure 20 is a further perspective view illustrating a pair of attachment elements like those shown in Figure 19; and

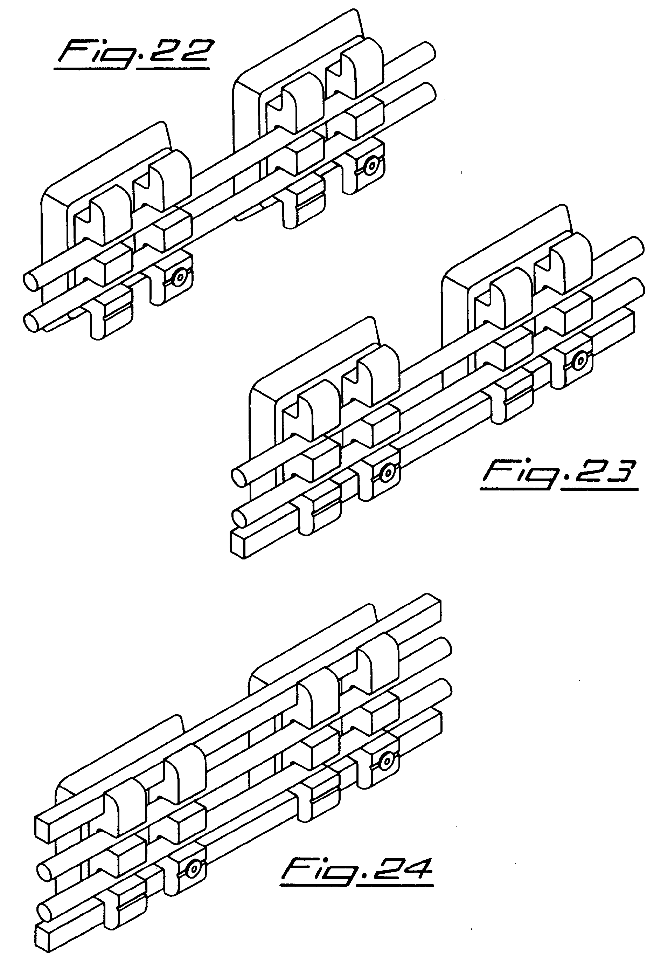

Figures 21, 22, 23 and 24 are perspective views showing a pair of attachment elements including four slots in which are respectively engaged 1, 2, 3 and 4 orthodontic wires, at said mentioned slots which, in this embodiment, are provided in a number of four.

### DESCRIPTION OF THE PREFERRED EMBODIMENTS

With reference to the number references of the above mentioned figures, the orthodontic device for aligning and displacing teeth, according to the present invention, which has been generally indicated by the reference number 1, comprises an attachment or bracket element 2, to be applied to a tooth 3, and including at least two horizontal slots 4, each being provided for receiving a respective orthodontic wire 5.

Thus, by using the bracket 2 according to the present invention, it is possible to process the patient by a novel processing technique, by using a double orthodontic wire.

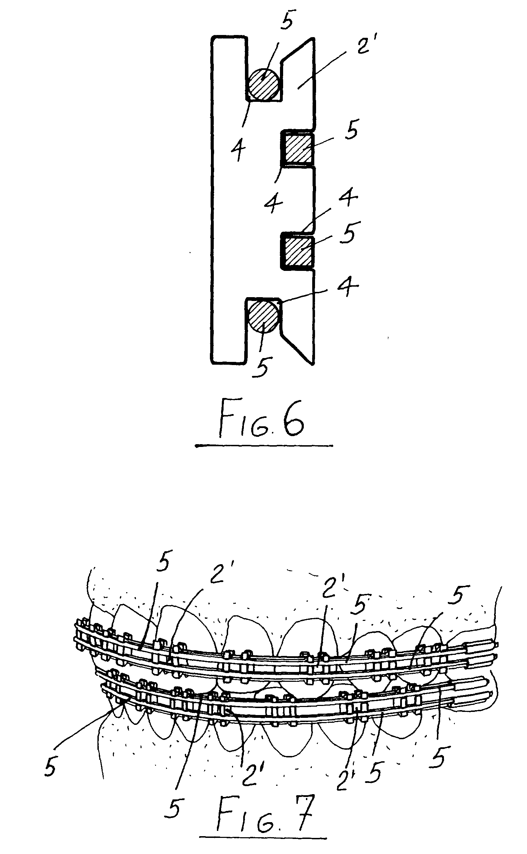

With reference to Figures 6 and 7, they show a modified embodiment of the present invention, provided for the use of a bracket 2' having a plurality of housing recesses 4, including suitable contours, for engaging therein a plurality of orthodontic wires 5.

In the embodiment shown in Figures 6 and 7, said recesses 4 are provided with curved or squared cross-section cavities, for housing each a respective orthodontic wire 5.

This technique allows to greatly reduce the therapeutical time since, owing to the provided bracket element, it is possible to impress an amount of biomechanical information much greater than that provided by conventional brackets.

Furthermore, the device according to the invention provides, by simultaneously engaging in the mentioned two or more slots of the bracket, two or more orthodontic wires, at least a pair of forces allowing to provide the tooth with a displacement or movement which can be called a body-like movement.

Thus, it is possible to fully control the tooth or teeth to be displaced according to the three spatial dimensions.

In other words, this can be obtained since the tooth displacements are strictly controlled by two orthodontic arches, simultaneously engaged in the two slots and suitable to slide therein.

This novel device can be applied in a lot of different clinical applications.

For example, one of the two wires, or orthodontic arches, engaged in a first slot, can be used as an anchoring element, whereas the second orthodontic arch can be used for providing a proper locating of the single teeth.

Thus, it is possible to provide a better control of the orthodontic forces and prevent the patient from being subjected to undesired reactive forces, such as the so-called "tipping" movement, in which the tooth crown and root are simultaneously displaced in opposite directions.

The two horizontal slots 4, provided on the vestibular surface of the bracket 2, can have like dimensions such as 018" x 018", or different dimensions, such as one of 018" x 022" and the other of 022" x 028", and can be formed on a bracket made according to at present well known methods, such as the Roth, Edgewise, Ricketts, Andrews, Tweed, Begg, etc. methods.

The bracket 2 can be made starting from a lot of different materials, such as ceramics material, nickel/titanium, steel or the like materials.

The operating flexibility of the orthodontic device according to the present invention is further enhanced by the fact that it can be applied on different cross-section orthodontic wire brackets.

It has been found that the invention fully achieves the intended aim and objects.

In practicing the invention, the used materials, and the contingent size and shapes can be any, depending on requirements and the status of the art.

## Claims

1. An orthodontic device for aligning and displacing teeth, comprising a bracket element to be applied to a tooth and having a vestibular surface, **characterized in that** said vestibular surface comprises two or more slots for receiving each a respective orthodontic wire.

2. A device according to Claim 1, **characterized in that** said device comprises more than two slots.

3. A device according to Claim 1 or 2, **characterized in that** said slots have a like size.

4. A device according to one or more of the preceding claims, **characterized in that** said slots have a different size.

5. A device according to one or more of the preceding claims, **characterized in that** said device comprises bracket elements having a plurality of housing recesses, of suitable contours, for engaging therein a corresponding plurality of orthodontic wires.

6. A device according to one or more of the preceding claims, **characterized in that** said recesses comprise curved or squared cross-section cavities, for housing each a respective orthodontic wire.

7. A device according to one or more of the preceding claims, **characterized in that** said device comprises one or more of the disclosed and/or illustrated characteristics.
